# EUROPEAN PATENT APPLICATION

(11) **EP 0 664 589 A1**
(43) Date of publication of application: **26.07.1995**
(21) Application number: 95300294.6
(22) Date of filing: 18.01.1995
(51) Int. Cl.: H01S 3/0975

(54) **Gas discharge lasers**

(30) Priority: 20.01.1994 GB 9401005
(71) Applicant: LUMONICS LIMITED, Hull, North Humberside HU7 OYE (GB)
(72) Inventor: Allcock, Geoffrey, Hull, North Humberside HU10 7AQ (GB)
(74) Representative: W.P. THOMPSON & CO.

(57) **Abstract**

A gas discharge laser comprises a laser tube (1) filled with gas, a pair of main laser electrodes (3,4) spaced opposite each other so as to define a discharge gap, within the gas in the laser tube (1) and a pre-ioniser (6). The pre-ioniser (6) is positioned opposite the discharge gap and comprises a pair of trigger electrodes (7,8) spaced opposite each other to define a trigger gap. The trigger electrodes (7,8) are connected to an R.F power supply (9) so as to cause an R.F discharge across the trigger gap which produced ultraviolet light which illuminates and pre-ionises the gas in the discharge gap between the main laser electrodes.

## Description

The present invention relates to gas discharge lasers and more specifically, to apparatus for initiating a gas discharge within a gas discharge laser. The apparatus of the present invention is particularly useful in initiating a gas discharge within an R.F. excited gas laser where single isolated pulses of laser light of relatively short duration are required. However, it also has application in gas discharge lasers operating at relatively high gas pressure in which initiating a gas discharge can be difficult.

It is known to use R.F. excited carbon dioxide gas lasers for marking information in the form of dot matrix patterns on products and for making holes in thin materials at high speed. However, in both of these laser applications it is essential that the pulses of laser light are produced on demand, otherwise dots in the dot matrix pattern are not formed, thus corrupting the information it contains, and holes are not made in the material.

In an R.F. excited carbon dioxide laser the pulses of laser light are produced by modulating or pulsing an R.F. power supply which is connected to laser electrodes within an enclosed laser cavity defined by a laser tube or envelope. This causes a gas discharge between the laser electrodes and produces a pulse of laser light. As long as the laser is operated without any relatively long intervals between the pulses of laser light a gas discharge, and thence the production of a pulse of laser light, is assured for each pulse from the R.F. power supply. However, for single isolated pulses of relatively short duration or for the first pulse in a train of pulses, problems can arise inasmuch as the gas may not break down to give a gas discharge between the laser electrodes. Of course, in the absence of a gas discharge there is no laser output. Alternatively, the gas may break down, but not immediately so that the resulting laser output is late and of much reduced intensity.

As might be expected this reluctance of the gas in a laser to break down is further exacerbated if the laser is operated with a relatively high gas pressure.

In order to overcome this problem and ensure reliable operation of the R.F. excited carbon dioxide laser it is known to use ultraviolet light to pre-ionise the gas within the laser and/or pre-condition the laser electrodes prior to applying an R.F. pulse to the laser electrodes. This assists the breakdown of the gas to produce a gas discharge between the laser electrodes and thence a laser output. The ultraviolet light is provided by a mercury discharge lamp positioned opposite the laser optical axis, that is to say opposite the gap between the laser electrodes. The ultraviolet light from the mercury discharge lamp causes photoelectric emission of electrons from the surfaces of the laser electrodes. These electrons act as charge carriers and initiate a gas discharge when an R.F. pulse is applied to the laser electrodes.

The problem with using a mercury discharge lamp to produce the ultraviolet light is that these lamps have a limited operational lifetime and since the technique requires the lamp to be on continuously, end of life is soon reached. For industrial applications, where sealed lasers are used, the lamp must be mounted outside the laser tube to facilitate its replacement, but mounting the lamp outside the laser tube necessitates the use of a window in the side of the laser tube through which the ultraviolet light can pass. Not only does this complicate the laser apparatus and increase its overall cost, but the use of a window limits the effectiveness of the technique to wavelengths greater than the ultraviolet cut-off of the window materials used. Consequently, the photon energies involved can produce photoelectrons but are insufficient to produce bulk ionisation in the laser gases.

Ultraviolet pre-ionisation of the laser gas is also known in TEA lasers operating at pressures up to and above atmospheric pressure. However, in this type of laser the ultraviolet light is not provided by a mercury discharge lamp, but rather by a plurality of pairs of electrodes, each of which defines a spark gap. These pairs of electrodes, which are located within the laser tube and are spaced along the length of the laser electrodes, opposite the laser optical axis, are fired by the same high voltage pulse which is applied to the laser electrodes. The resulting discharge pulse across each of the spark gaps is in the form of a relatively high energy arc and because of this produces hard ultraviolet light which illuminates the gas between the laser electrodes and causes uniform pre-ionisation thereof along the full length of the laser electrodes. As the discharge in a TEA laser is DC in nature it is essential to ensure that a uniform gas discharge is produced along the full length of the laser electrodes, otherwise the discharge between the laser electrodes will be reduced to a localised arc - hence the need to provide a plurality of pairs of electrodes spaced along the length of the laser electrodes.

Although this technique is well established, it suffers from two disadvantages. Firstly, the arcs produced in the spark gaps erode the spark gap electrodes and secondly, the resulting chemistry causes the spark gap electrode surfaces to oxidise which results in a gradual depletion of oxygen from the laser gas with consequential degradation in laser output. This is unsatisafactory even in a TEA laser, but in a long life sealed carbon dioxide laser it is totally unacceptable. For sealed carbon dioxide lasers where mercury discharge lamps have proved to be unreliable, the problem becomes one of generating sufficiently short wavelength U.V. light within the laser tube, without resorting to high energy arc discharges.

It is an object of the present invention to provide apparatus for providing ultraviolet light within a gas discharge laser to initiate a gas discharge within the laser which apparatus obviates or at least substantially mitigates the disadvantages associated with the conventional techniques as described hereinabove.

The apparatus for producing ultraviolet light is particularly suited for use in an R.F. excited gas discharge laser, but may also find application in other types of gas discharge laser including those operating at relatively high pressures.

According to the present invention there is provided a gas discharge laser comprising a laser tube filled with gas, a pair of main laser electrodes spaced opposite each other so as to define a discharge gap, within the gas in the laser tube and a pre-ioniser positioned opposite the discharge gap, which pre-ioniser comprises a pair of trigger electrodes spaced opposite each other to define a trigger gap, characterised in that the trigger electrodes are connected to an R.F. power supply so as to cause an R.F. discharge across the trigger gap which produces ultraviolet light which illuminates and pre-ionises the gas in the discharge gap between the main laser electrodes.

When an R.F. pulse is applied to the trigger electrodes in the pre-ioniser there is an R.F. discharge across the trigger gap. The ultraviolet light produced by this discharge illuminates the main laser electrodes and the gas in the discharge gap between them. Since the pre-ioniser is physically located within the laser tube hard ultraviolet light (i.e. short wavelength) enters the discharge gap between the main laser electrodes and this results in pre-ionisation of the gas in the discharge gap. Photo-electrons are also produced at the main laser electrode surfaces. Stray charged particles directly produced by the pre-ioniser may also find their way into the discharge gap. The overall result is to have charged particles available between the main laser electrodes which ensures a laser discharge between the main laser electrodes when a pulse of power is applied. As a consequence, single isolated pulses of laser light can be readily produced on demand and the previously observed jitter in the time for the laser discharge to initiate is removed, resulting in improved control of the energy per pulse. Indeed, using jitter in the time for the main laser discharge to initiate as a measure of the effectiveness of this technique, a direct comparison can be made between this new technique and the prior art mercury discharge lamp. When a mercury discharge lamp is used to illuminate the main laser electrodes and a single isolated pulse of R.F. is supplied to the electrodes, the time taken for the discharge to initiate can vary from several microseconds to over fifty microseconds. In comparison, illumination of the electrodes using the pre-ioniser of the present invention eliminates this problem and allows initiation of the main laser discharge in less than one microsecond.

Since the pre-ioniser involves an R.F. discharge, it can be made from the same materials that are used in conventional R.F. excited lasers and this makes it ideally suited for use in such lasers. Moreover, R.F. excited discharges do not suffer from the disadvantages associated with D.C. discharges. Instead, R.F. excited discharges result in electrode passivation with respect to oxygen loss and no electrode erosion. All of the proven techniques and cleaning procedures which are applicable to R.F. excited laser electrodes are also directly transferable to the new pre-ioniser.

Preferably, the pre-ioniser is excited by its own R.F. power supply which provides a continuous output signal. This results in a continuous R.F. excited gas discharge between the trigger electrodes of the pre-ioniser and continuous illumination of the main laser electrodes with ultraviolet light. This continuous illumination ensures the availability of charged particles to initiate the laser discharge at all times. In a preferred embodiment, pulses of increased power are superimposed on top of the continuous output signal from the R.F. power supply to initiate a discharge in the pre-ioniser itself when the equipment is first turned on. Of course, it will be appreciated that once the pre-ioniser discharge has been initiated it is no longer essential to maintain the pulses of increased power from the R.F. power supply. However, where the pulses occur in a low duty cycle the average power dissipation of the R.F. power supply and hence its cooling requirements are not significantly increased and it may therefore be expedient not to discontinue the pulses.

In a preferred embodiment of the invention the pre-ioniser has a circular construction with co-axial electrodes and an annular discharge is formed in the gap between the electrodes. The inner electrode of the coaxial pair is electrically insulated from the outer electrode which is connected to ground. The inner electrode is connected to the pre-ioniser R.F. power supply via a matching circuit which serves to match the output impedance of the R.F. power supply to the impedance of the pre-ioniser discharge in its running condition. In the absence of a gas discharge between the coaxial electrodes (ie. at first turn on), the electrodes, matching circuit and R.F. power supply represent a high Q resonant circuit which generates sufficient voltage, and hence electric field across the gap between the electrodes, to cause gas breakdown. The surface area of the pre-ioniser electrodes defines the area of the R.F. gas discharge. Too small an area of gas discharge can lead to discharge instability problems whereas too large an area results in a reduced Q factor and difficulties in initiating the discharge, it also necessitates the use of an R.F. power supply with greater average power capability. In a preferred embodiment the trigger electrodes define a discharge area of 179 mm².

In a preferred embodiment of the invention the frequency of the R.F. power supply which drives the pre-ioniser is different from the frequency of the R.F. power supply which supplies power to the main laser electrodes. This allows normal de-coupling techniques to be used in order to prevent cross talk between the two circuits. The circuits used are tuned to the frequency of interest and any signals picked up at other frequencies are attenuated.

An embodiment of the present invention will now be described, by way of example, with reference to the accompanying drawings, in which
Fig. 1 is a schematic cross-sectional view of an R.F. excited carbon dioxide gas laser in accordance with the present invention which comprises a single pre-ioniser;
Fig. 2 is a schematic longitudinal section through the R.F. excited carbon dioxide laser shown in Fig. 1; and
Fig. 3 is a schematic longitudinal section through a high pressure pulsed gas laser in accordance with the present invention which comprises a plurality of pre-ionisers.

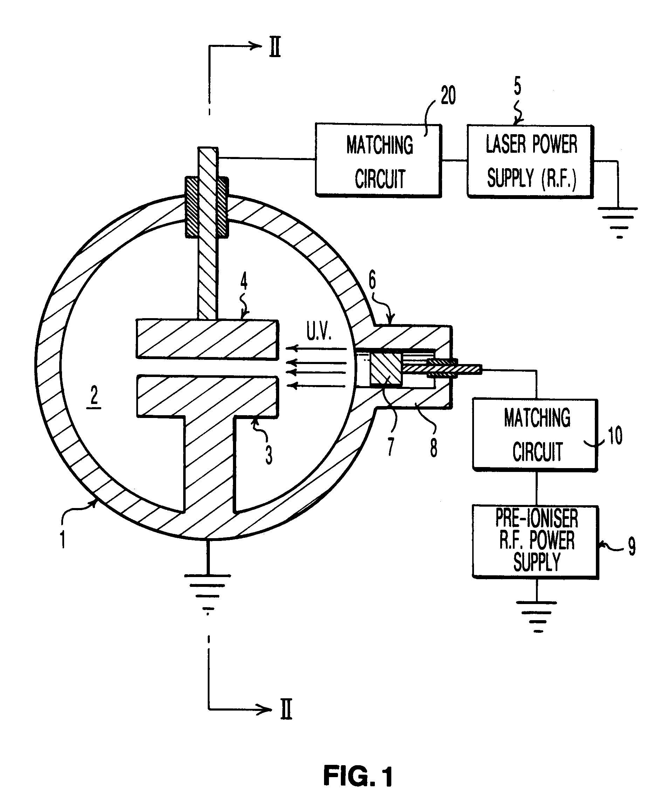

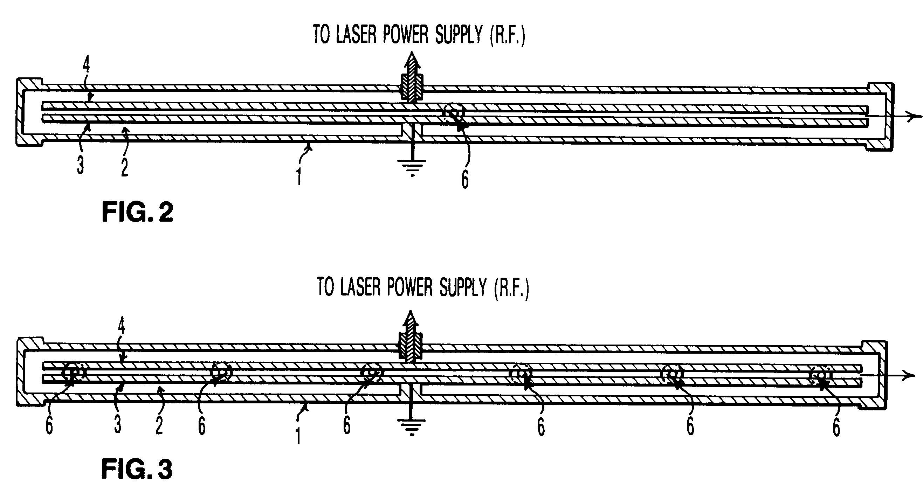

The laser shown in Figs. 1 and 2 of the accompanying drawings comprises a laser tube 1 which defines within its walls a laser cavity 2, and a pair of rectangular laser electrodes 3, 4 mounted opposite each other within the laser cavity 2. In this case the electrodes 3, 4 are 364 mm long by 44 mm wide and are spaced from each other by approximately 2 mm to form a discharge gap. In conventional fashion a gas discharge occurs in the discharge gap when a pulse of R.F. power is applied to the laser electrodes 3, 4 from an R.F. power supply 5 and this gas discharge produces a pulse of laser light. The output impedance of the R.F. power supply 5 is matched to the impedance of the laser electrodes 3, 4 by means of a matching circuit 20. The peak power of the R.F. pulse applied to the laser electrodes is typically of the order of 2,000 Watts.

As described above the the R.F. gas discharge laser is of entirely conventional design. However, it does differ from a conventional R.F. gas discharge laser inasmuch as it includes a pre-ioniser 6 mounted in the wall of the laser tube 1 opposite the laser axis and midway between the ends of the laser tube 1. The pre-ioniser 6 takes the form of a pair of co-axial electrodes 7, 8, the inner one 7 of which is connected to its own R.F. power supply 9 via a matching circuit 10.

The electrodes 7, 8 are spaced from each other by approximately 0.5 mm and when a pulse of R.F. power is applied thereto, it brings about an R.F. discharge in the gap therebetween. A continuous discharge is maintained in the trigger gap by providing a continuous output signal from the R.F. power supply. The R.F. discharge in the trigger gap produces ultraviolet light which illuminates the main laser electrodes 3, 4 and the gas in the discharge gap between them. This in turn pre-ionises the gas in the gap between the main laser electrodes and predisposes it to break down into a gas discharge when an R.F. pulse is applied to the main laser electrodes 3, 4. Although the pre-ioniser 6 is very small in comparison to the laser electrodes so that it only illuminates with ultraviolet light a small part thereof, it has been found that this is sufficient to seed the discharge gap with enough charged particles to initiate a discharge when an R.F. pulse is applied to the main laser electrodes 3, 4. This contrasts with TEA lasers where a plurality of pairs of electrodes must be provided along the length of the laser electrodes in order to ensure uniform pre-ionisation.

The R.F. power supply 9 excites the pre-ioniser 6 with a continuous output signal of about 10 Watts upon which is superimposed a one millisecond pulse of R.F. at a duty cycle of ten per cent. The peak power during this pulse reaches a value of 20 Watts. The pulse is produced by increasing the R.F. drive signal applied to an output transistor of the R.F. power supply using a 100 Hz modulation signal.

The higher peak power pulses help to initiate a discharge in the pre-ioniser 6 when the equipment is first turned on while the low duty cycle reduces the average power dissipation of the R.F. power supply and hence its cooling requirements. Once a discharge in the pre-ioniser is initiated it remains on and provides continuous illumination of the main laser electrodes with ultraviolet light.

Any jitter in the time for the pre-ioniser discharge to initiate is of no consequence since it occurs only once and during the normal self test routines that occur at first turn on of the equipment in which the laser is used. Once the pre-ioniser discharge is initiated it remains on until the equipment is powered down.

The matching circuit 10 matches the impedance of the R.F. power supply to the impedance of the pre-ioniser. In the absence of a gas discharge between the co-axial electrodes 7, 8 (ie. at first turn on), the electrodes 7,8, matching circuit 10 and R.F. power supply 9 represent a relatively high Q resonant circuit which generates sufficient voltage, and hence electric field across the gap between the electrodes 7, 8, to cause gas breakdown. It will be understood that the surface area of the electrodes 7, 8 defines the area of the R.F. gas discharge, such that too small an area of gas discharge can lead to discharge instability problems, whilst too large an area results in a reduced Q factor and difficulties in initiating the discharge. In the pre-ioniser 6 the electrodes have a surface area of 179 mm².

In order to prevent cross talk between the two R.F. power supplies 5 and 9 each is operated at a different frequency from the other. Typically, the pre-ioniser R.F. power supply 9 operates at 49 MHz and the main laser R.F. power supply 5 at 81.36 MHz. This allows normal de-coupling techniques to be used in order to prevent cross talk between the two circuits. The circuits used are tuned to the frequency of interest and any signals picked up at other frequencies are attenuated. Filter circuits can be designed which selectively pass the signal frequency of interest while severely attenuating signals of a second frequency.

Fig. 3 shows a high pressure pulsed gas laser which may or may not be excited by an R.F. power supply. It comprises a plurality of pre-ionisers 6 spaced along the length of the main laser electrodes 3, 4 and all connected to an R.F. power supply. The use of a plurality of pre-ionisers will ensure initiation of the laser discharge at a number of sites from which discharge will then spread. This may be critical in a high pressure laser where the initiation of any discharge is always more difficult.

In the accompanying drawings the pre-ioniser 6 is shown located within the laser tube 1 with the coaxial electrodes 7, 8 in actual physical contact with the gas within the laser tube 1. However, it will be appreciated that this is not essential for the effective operation of a laser in accordance with the present invention. Provided that the actual walls of the laser tube 1 are made of a non-conductive material, typically glass or a ceramic one or even both of the two electrodes can be mounted on the outer surface of the laser tube 1. As R.F. passes through insulation there will still be an R.F. discharge between the two electrodes, which R.F. discharge will occur within the confines of the laser tube, thereby giving rise to ultraviolet light which will illuminate the main laser electrodes and the gas in the discharge gap between them. Indeed, it may be noted that not even the main laser electrodes need actually to be physically located within the laser tube; these two can be mounted on the outer surface of the tube.

It should also be noted that whilst the present invention has been described with reference to a sealed gas laser comprising one pair of trigger electrodes for the pre-ioniser and one pair of main laser electrodes, the pre-ioniser may comprise more than one pair of electrodes and there may be more than one pair of main laser electrodes.

## Claims

1. A gas discharge laser comprising a laser tube (1) filled with gas, a pair of main laser electrodes (3,4) spaced opposite each other so as to define a discharge gap, within the gas in the laser tube (1) and a pre-ioniser (6) positioned opposite the discharge gap, which pre-ioniser (6) comprises a pair of trigger electrodes (7,8) spaced opposite each other to define a trigger gap, characterised in that the trigger electrodes (7,8) are connected to an R.F power supply (9) so as to cause an R.F discharge across the trigger gap which produces ultraviolet light which illuminates and pre-ionises the gas in the discharge gap between the main laser electrodes.

2. A gas discharge laser according to Claim 1, characterised in that the R.F power supply (9) is on continuously so as to cause a continuous R.F discharge across the trigger gap.

3. A gas discharge laser according to Claim 2, characterised in that a high power pulse is superimposed on the continuous R.F signal output from the R.F power supply (9) in order to initiate a discharge in the pre-ioniser (6) when it is first turned on.

4. A gas discharge laser according to any preceding claim, characterised in that the main laser electrodes (3,4) are connected to an R.F power supply, (5) which R.F power supply (5) is separate from and operates at a different frequency from that of the R.F power supply (9) connected to the trigger electrodes.

5. A gas discharge laser according to any preceding claim, characterised in that a plurality of pre-ionisers (6) are spaced at intervals along the length of the main laser electrodes (3,4), each of which pre-ionisers (6) is connected to an R.F power supply.

6. A gas discharge laser according to any preceding claim, characterised in that the trigger electrodes (7,8) comprising the or each pre-ioniser (6) are co-axial.

7. A gas discharge laser according to any one of claims 1 to 5, characterised in that the laser tube is comprised of a non-conductive material and one or both of the trigger electrodes are located outside the laser tube on the outer surface thereof.
